# EUROPEAN PATENT APPLICATION

(11) **EP 2 487 641 A1**
(43) Date of publication of application: **15.08.2012**
(21) Application number: 12154310.2
(22) Date of filing: 07.02.2012
(51) Int. Cl.: G06Q 50/06

(54) **System for sending utility meter alerts**

(30) Priority: 11.02.2011 US 201113025363
(71) Applicant: General Electric Company, Schenectady, New York 12345 (US)
(72) Inventor: Lafrance, Ryan Marc, Atlanta, GA Georgia 30339-8402 (US); Ree, Bradley Richard, Atlant, GA Georgia 30339-8402 (US)
(74) Representative: Cleary, Fidelma

(57) **Abstract**

Systems (100, 200) for sending utility meter (110) alerts in response to a predetermined threshold condition being met at the utility meter (110) are disclosed. In one embodiment, the utility meter (110) has a communications stack (114) embedded therein, and the communications stack (114) is configured to send an alert through a network (120) in response to a predetermined threshold being met. In another embodiment, a server (210) is communicatively connected to a utility meter (110), and the server (210) is configured to send an alert through a network (120) in response to a predetermined threshold being met at the utility meter (110). In either embodiment, the alert can comprise an email, a Short Message Service (SMS), a voice alert, or an instant message. Examples of predetermined threshold conditions that could trigger an alert include total energy consumption, peak energy consumption or total currency, e.g., dollars, spent at the location of the utility meter (110) for a set consumption period.

## Description

### BACKGROUND OF THE INVENTION

The subject matter disclosed herein relates generally to meter technology, and more particularly, to a system for sending utility meter alerts in response to a predetermined threshold condition being exceeded at the utility meter.

In the past, utility meters have been used to track consumption of a utility service at a given location or by a given user. For instance, electrical meters have been used to record a household's electrical consumption. Recently, there has been demand for more functionality in utility meters, as a result, utility meters have evolved from mechanical devices that only monitor and display the amount of a given service flowing through them, to complex computerized systems having a variety of management and informational functions.

Currently, a utility user, e.g., a homeowner, does not know their energy consumption until a bill is received at the end of the month. At that time, the user is only able to change their usage for the following month. One response to this dilemma is the development of in-home displays to allow for usage and billing information to be displayed inside the home. However, such in-home displays add cost to a smart meter deployment for the utility company. Also, such in-home displays often consume batteries within the utility meter at a relatively fast rate.

### BRIEF DESCRIPTION OF THE INVENTION

Systems for sending utility meter alerts in response to a predetermined threshold condition being met or exceeded at the utility meter are disclosed.

The invention resides in a system comprising: at least one of: a utility meter; and a server communicatively connected to the utility meter, wherein at least one of the utility meter or the server is configured to send an alert through a network in response to a the predetermined threshold being met at the utility meter.

In one aspect, the system may comprise a utility meter and a communications stack embedded in the utility meter, wherein the communications stack is configured to send the alert through a network in response to a predetermined threshold being exceeded.

In another aspect, the system may comprise a server communicatively connected to a utility meter, wherein the server is configured to send the alert through a network in response to a predetermined threshold being exceeded at the utility meter.

### BRIEF DESCRIPTION OF THE DRAWINGS

Embodiments of the present invention will now be described, by way of example only, with reference to the accompanying drawings in which:
FIG. 1 an illustrative environment for a system for sending utility meter alerts according to an embodiment of the invention;
FIG. 2 shows a schematic illustration of a utility meter according to an embodiment of the invention;
FIG. 3 shows a flow chart for a system as shown in FIG. 2, according to an embodiment of the invention;
FIG. 4 shows a schematic illustration of a utility meter according to an embodiment of the invention;
FIG. 5 shows a flow chart for a system as shown in FIG. 4, according to an embodiment of the invention;

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

Systems for sending utility meter alerts in response to a predetermined threshold condition being exceeded at the utility meter are disclosed.

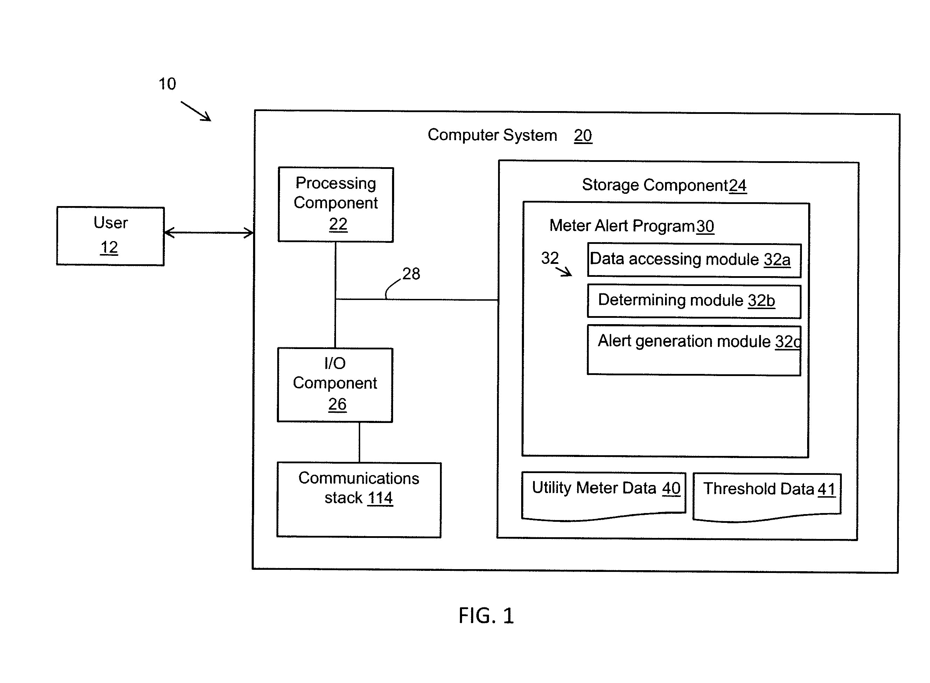

Turning to the drawings, FIG. 1 shows an illustrative environment 10 for a system for sending utility meter alerts according to an embodiment. To this extent, environment 10 includes a computer system 20 that can perform a process described herein in order to send utility meter alerts. In particular, computer system 20 is shown including a meter alert program 30, which makes computer system 20 operable to send utility meter alerts by performing a process described herein. Technical effects of the various embodiments of the present invention include computer systems that generate and send utility meter alerts as described herein.

Computer system 20 is shown including a processing component 22 (e.g., one or more processors), a storage component 24 (e.g., a storage hierarchy), an input/output (I/O) component 26 (e.g., one or more I/O interfaces and/or devices), and a communications pathway 28. In general, processing component 22 executes program code, such as meter alert program 30, which is at least partially fixed in storage component 24. While executing program code, processing component 22 can process data, which can result in reading and/or writing transformed data from/to storage component 24 and/or I/O component 26 for further processing. Pathway 28 provides a communications link between each of the components in computer system 20. I/O component 26 can comprise one or more human I/O devices, which enable a human user 12 to interact with computer system 20 and/or one or more communications devices to enable a system user 12 to communicate with computer system 20 using any type of communications link. To this extent, meter alert program 30 can manage a set of interfaces (e.g., graphical user interface(s), application program interface, and/or the like) that enable human and/or system users 12 to interact with meter alert program 30. Further, meter alert program 30 can manage (e.g., store, retrieve, create, manipulate, organize, present, etc.) the data, such as utility meter data 40 and threshold data 41, using any solution.

In any event, computer system 20 can comprise one or more general purpose computing articles of manufacture (e.g., computing devices) capable of executing program code, such as meter alert program 30, installed thereon. As used herein, it is understood that "program code" means any collection of instructions, in any language, code or notation, that cause a computing device having an information processing capability to perform a particular action either directly or after any combination of the following: (a) conversion to another language, code or notation; (b) reproduction in a different material form; and/or (c) decompression. To this extent, meter alert program 30 can be embodied as any combination of system software and/or application software. As discussed in more detail herein, meter alert program 30 can be implemented in a utility meter itself or within a server communicatively connected to a utility meter, or can be divided between a utility meter and such a server as desired.

Further, meter alert program 30 can be implemented using a set of modules 32. In this case, a module 32 can enable computer system 20 to perform a set of tasks used by meter alert program 30, and can be separately developed and/or implemented apart from other portions of meter alert program 30. For example, modules 32 can include a data accessing module 32a, a determining module 32b, and an alert generation module 32c.

As used herein, the term "component" means any configuration of hardware, with or without software, which implements the functionality described in conjunction therewith using any solution, while the term "module" means program code that enables a computer system 20 to implement the actions described in conjunction therewith using any solution. When fixed in a storage component 24 of a computer system 20 that includes a processing component 22, a module is a substantial portion of a component that implements the actions. Regardless, it is understood that two or more components, modules, and/or systems may share some/all of their respective hardware and/or software. Further, it is understood that some of the functionality discussed herein may not be implemented or additional functionality may be included as part of computer system 20.

When computer system 20 comprises multiple computing devices (for example, a computing device within a utility meter or within a server) each computing device can have only a portion of meter alert program 30 fixed thereon (e.g., one or more modules 32a-32c). However, it is understood that computer system 20 and meter alert program 30 are only representative of various possible equivalent computer systems that may perform a process described herein. To this extent, in other embodiments, the functionality provided by computer system 20 and meter alert program 30 can be at least partially implemented by one or more computing devices that include any combination of general and/or specific purpose hardware with or without program code. In each embodiment, the hardware and program code, if included, can be created using standard engineering and programming techniques, respectively.

Regardless, when computer system 20 includes multiple computing devices, the computing devices can communicate over any type of communications link. Further, while performing a process described herein, computer system 20 can communicate with one or more other computer systems using any type of communications link. In either case, the communications link can comprise any combination of various types of wired and/or wireless links; comprise any combination of one or more types of networks; and/or utilize any combination of various types of transmission techniques and protocols. For example, a smart meter according to embodiments of this invention can include a high bandwidth advanced metering infrastructure (AMI) network, as known in the art. The AMI network is one way in which the meter can communicate back to a utility company. The AMI network can comprise a radio frequency (RF) mesh network and/or a cellular network, that can communicate utility reading data, e.g., utility usage data, on regular time intervals. A utility company can also request the current utility reading data from the meter.

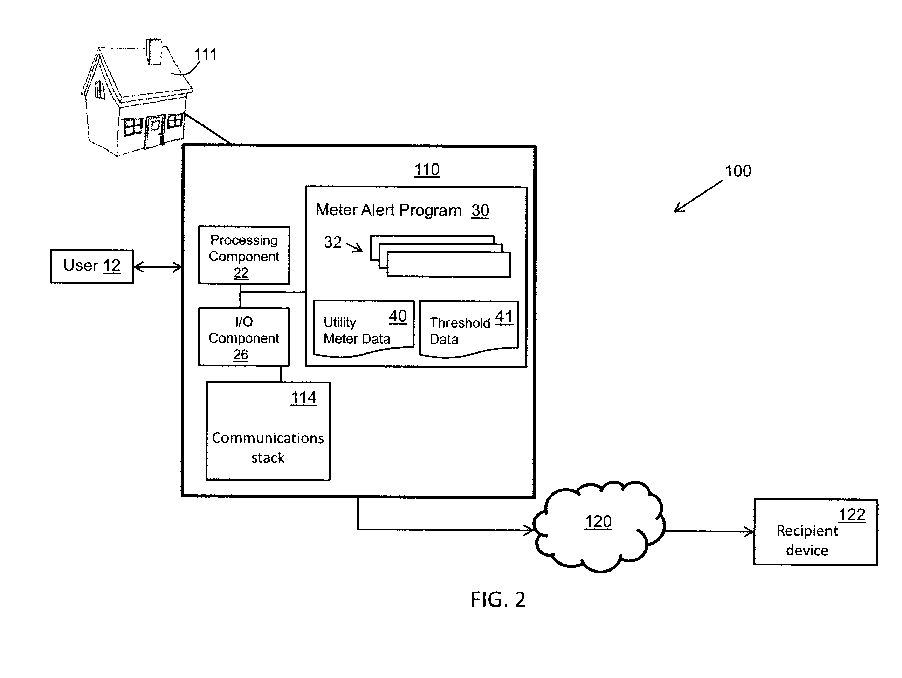

As discussed herein, meter alert program 30 enables computer system 20 to send utility meter alerts in response to a predetermined threshold being met or exceeded. In a first embodiment, shown in FIG. 2, a system 100 is shown for an embodiment in which a utility meter itself has meter alert program 30 embedded therein, and therefore the utility meter itself sends an alert. As shown in FIG. 2, system 100 includes a utility meter 110 associated with a building 111. Utility meter 110 may comprise an electrical meter, a water meter, a gas meter or any other form of utility meter as is known in the art. As known in the art, utility meter 110 is configured to take utility usage information for building 111 and store that information as utility meter data 40. Utility meter data 40 can be stored on any now known or later developed storage or memory component capable of storing data.

In the embodiment shown in FIG. 2, utility meter 110 further includes threshold data 41, which can be inputed by user 12 (FIG. 1), i.e., an owner of building 111. For example, user 12 can input (e.g., through I/O Component 26) a total energy consumption threshold for a specific time interval, a peak energy usage threshold, or a threshold limit of total currency, e.g., dollars, spent on a utility for a specific time interval. Such information is referred to as threshold data 41 and can be stored in utility meter 110 on any now known or later developed storage or memory component capable of storing data.

In the embodiment shown in FIG. 2, utility meter 110 further includes a communications stack 114 embedded therein. Communications stack 114 can utilize any now known or later developed protocols for transmitting information over a network. For example, communications stack 114 can utilize an Internet Protocol (IP) suite, for example, a Transmission Control Protocol/Internet Protocol suite (TCP/IP) or User Datagram Protocol/Internet Protocol (UDP/IP). Communications stack 114 is configured to send an alert through a network 120, e.g., the Internet, in response to meter alert program 30 determining that a predetermined threshold has been exceeded.

Meter 110 further includes modules 32 as part of meter alert program 30. Data accessing module 32a is configured to access the utility data 40 and threshold data 41, and determining module 32b is configured to compare utility data 40 with threshold data 41 to determine when a predetermined threshold has been met. It is understood that a threshold can be determined to be "met" if utility data 40 equals or exceeds a predetermined threshold in threshold data 41. Once a predetermined threshold has been met, alert generation module 32c generates an alert. For example, a user could set a threshold for total energy usage in building 111 for a given time period, or a threshold for peak energy usage, or a threshold for total currency, e.g., dollars, spent on a utility for building 111. Once this threshold has been met, i.e., meter alert program 30 determines that the utility data 40 equals or exceeds a predetermined threshold in threshold data 41, alert generation module 32c generates an alert.

The alerts generated by meter 110 can include any form of electronic messaging, for example, an email, a Short Message Service (SMS), a voice alert transmitted via Voice over IP (VoIP) and an instant message. Alerts are sent over network 120 to a receipient device 122. Recipient device 122 can comprise any computing device capable of receiving an electronic message, for example, a personal digital assistant (PDA), a computer, a mobile phone, a phone, a fax machine, an in-home display device, etc. Multiple alerts can also be generated, to send to multiple recipient devices.

The alerts may be based on a wide range of programmable thresholds by user 12, e.g., an owner of building 111. In one example, a user can set a threshold amount of total energy consumption for building 111 for a set consumption period, e.g., a day, a week, a month, or a quarter. For example, a user may want to be alerted if the total energy consumption for a building exceeds a certain level in a day, week, month, or quarter, regardless of what the day-to-day usage is. In another example, a user can set a threshold amount for a peak usage. For example, a user may want to be alerted if the current energy usage in the building ever exceeds a predetermined limit. In this way, a user can have real-time, or near real-time, alerts whenever the usage peaks too high. In another example, a user can set a threshold currency amount for a utility for building 111 for a set consumption period, e.g., a day, a week, a month or a quarter. For example, a user may want to be alerted when the energy consumption in the building will result in a cost above a certain amount in a given day, week, month or quarter. In all examples, once the threshold has been met, meter 110 will generate and send an alert to the user informing the user that their predetermined threshold has been exceeded. In this way, the user can take steps to alter their utility usage to lower costs or to conserve energy.

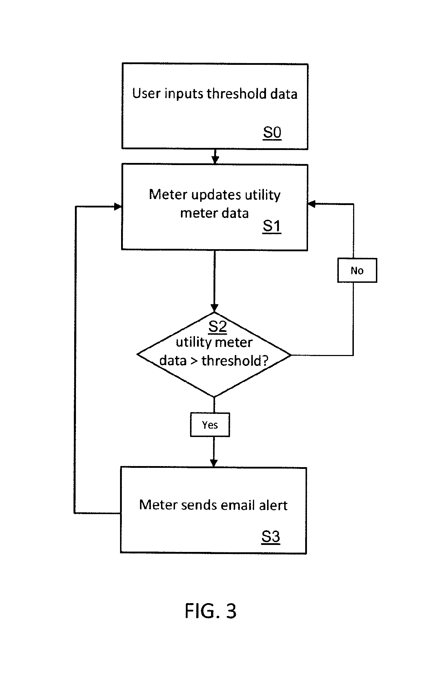

Turning to FIG. 3, a flow chart illustrating system 100 as shown in FIG. 2, is shown. First, in step S0, a user inputs threshold data 41. It is noted that this step can be repeated as desired by the user. For example, a user can continuously change his inputted threshold data 41 throughout the process, e.g., by using I/O component 26 to input data. In step S1, meter 110 takes utility readings for utility usage in building 111 and records those readings as meter utility data 40. Next, in step S2, meter 110 determines whether the utility data 40 exceeds a predetermined threshold in threshold data 41. For example, utility data 40 could include the total currency amount expended to date for the utility being monitored, a total energy amount used for the utility being monitored, a current energy usage amount, or any other statistic monitored and recorded by utility meter 110. The predetermined thresholds set by a user can correspond to the utility data 40, for example, the predetermined threshold could be a total amount of currency to be spent for a specific utility for a specific time period, or the predetermined threshold could be a total energy amount to be used for a specific utility for a specific time period, or the predetermined threshold could be a peak energy usage level. If the utility data 40 exceeds a predetermined threshold, in step S3, communications stack 114 within meter 110 generates and sends an alert. If utility data 40 does not exceed a predetermined threshold, the process repeats steps S1 and S2 until utility data 40 exceeds a predetermined threshold.

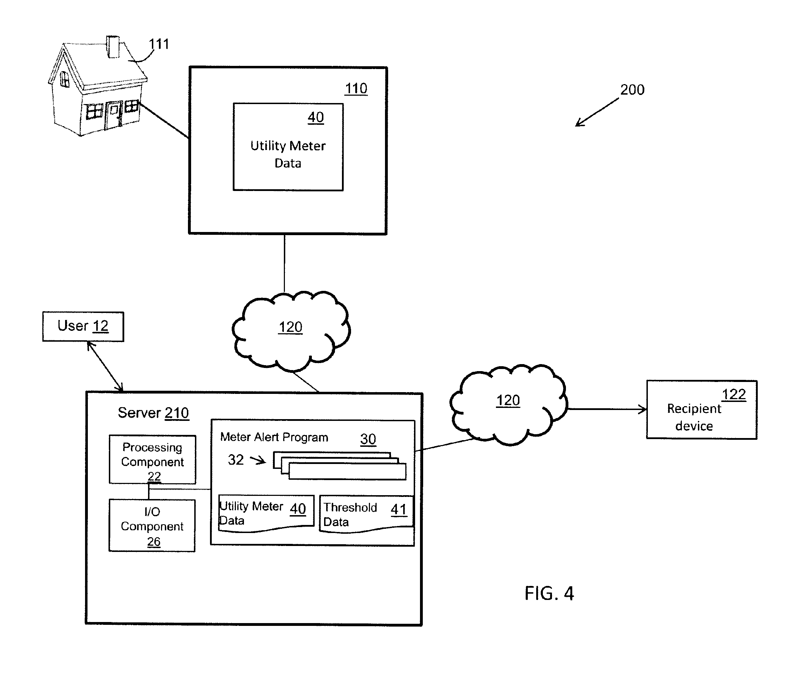

Turning to FIG. 4, another embodiment of the invention is shown. In this embodiment, system 200 is similar to system 100 shown in FIGS. 2 and 3, but in system 200, a server 210 generates and sends the alerts, rather than meter 110 which generated and sent the alerts in the previous embodiment. In this embodiment shown in FIG. 4, server 210 is configured to access utility data 40 stored on meter 110 for building 111. Server 210 is further configured to receive input information from user 12 in the form of threshold data 41, e.g., through I/O component 26. It is also understood that threshold data 41 could also be stored on meter 110, as in the embodiment shown in FIG. 2, and in that case, a user could input threshold data 41 directly into meter 110. Regardless of whether server 210 receives threshold data 41 from meter 110 or threshold data 41 is inputted and stored directly on server 210, server 210 then compares utility data 40 and threshold data 41 to determine whether utility data 40 exceeds a predetermined threshold in threshold data 41. Server 210 can be programmed to access the data from meter 110 on a pre-set schedule, for example, at the completion of each meter read by meter 110. Server 210 can then generate and transmit the alerts as appropriate through a network 120, e.g., the Internet, to recipient device(s) 122.

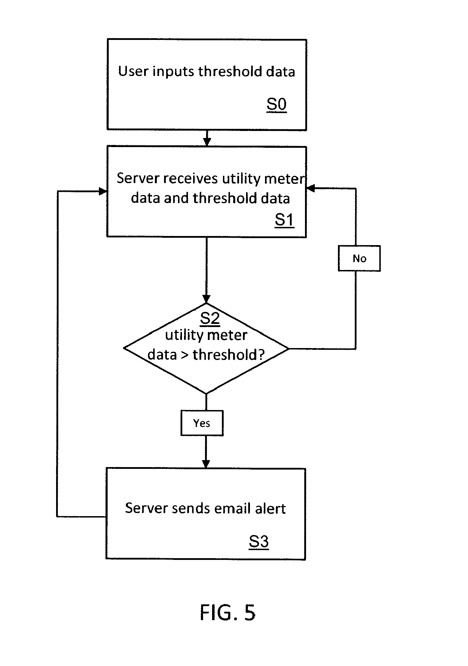

Turning to FIG. 5, a flow chart illustrating system 200 as shown in FIG. 4, is shown. First, in step S0, a user inputs threshold data 41 which is stored on server 210 or meter 110. It is noted that this step can be repeated as desired by the user. For example, a user can continuously change his inputted threshold data throughout the process, e.g., by using I/O component 26 to input data. In step S1, server 210 accesses utility data 40, including utility readings for building 111, from meter 110. Next, in step S2, server 210 determines whether utility data 40 exceeds a predetermined threshold in threshold data 41. For example, utility data 40 could include the total currency amount expended to date for the utility being monitored, a total energy amount used for the utility being monitored, a current energy usage amount, or any other statistic monitored and recorded by utility meter 110. The predetermined thresholds set by a user can correspond to the utility data 40, for example, the predetermined threshold could be a total amount of currency to be spent for a specific utility for a specific time period, or the predetermined threshold could be a total energy amount to be used for a specific utility for a specific time period, or the predetermined threshold could be a peak energy usage level. If the utility data 40 exceeds a predetermined threshold, in step S3, server 210 generates and sends an alert. If utility data 40 does not exceed a predetermined threshold, the process repeats steps S1 and S2 until utility data 40 exceeds a predetermined threshold.

It is also understood that while FIGS. 2 and 3 show a system in which a utility meter generates and sends alerts, and FIGS. 4 and 5 show a system in which a server generates and sends alerts, functionality for generating and sending alerts can be shared between a utility meter and a server, as desired. For example, a meter could store utility data 40, determine whether utility data 40 exceeds a predetermined threshold, and then a server could access that information (or the information could be pushed to a server) and generate and send an alert. In another example, a meter could store utility data 40 and threshold data 41, send the data to a server (or the server could poll the meter for the data), the server could compare usage data 40 and threshold data 41, and then the server could send that comparison data to the meter, and the meter could send out the alert if necessary. In other words, the various modules 32 discussed herein in connection with meter alert program 30 can be shared across various computing devices, for example, across a utility meter and a server.

Each of the components in the figures may be connected via conventional means, e.g., via wireless mesh, WiFi, power line communication, cellular, a common conduit or other known means. The meters and systems of the present disclosure are not limited to any one particular meter, electrical meter, smart meter or other system, and may be used with other power and communication systems and/or systems (e.g., wireless router, network hub, server, etc.). Additionally, the meter and systems of the present invention may be used with other systems not described herein that may benefit from the teachings or embodiments of the invention.

While shown and described herein as a method and system for sending utility meter alerts, it is understood that aspects of the invention further provide various alternative embodiments. For example, in one embodiment, the invention provides a computer program fixed in at least one computer-readable medium, which when executed, enables a computer system to send utility meter alerts. To this extent, the computer-readable medium includes program code, such as meter alert program 30 (FIG. 1), which implements some or all of a process described herein. It is understood that the term "computer-readable medium" comprises one or more of any type of tangible medium of expression, now known or later developed, from which a copy of the program code can be perceived, reproduced, or otherwise communicated by a computing device. For example, the computer-readable medium can comprise: one or more portable storage articles of manufacture; one or more memory/storage components of a computing device; paper; and/or the like.

In still another embodiment, the invention provides a method of generating a system for sending utility meter alerts. In this case, a computer system, such as computer system 20 (FIG. 1), can be obtained (e.g., created, maintained, made available, etc.) and one or more components for performing a process described herein can be obtained (e.g., created, purchased, used, modified, etc.) and deployed to the computer system. To this extent, the deployment can comprise one or more of: (1) installing program code on a computing device; (2) adding one or more computing and/or I/O devices to the computer system; (3) incorporating and/or modifying the computer system to enable it to perform a process described herein; and/or the like.

It is understood that aspects of the invention can be implemented as part of a business method that performs a process described herein on a subscription, advertising, and/or fee basis. That is, a service provider could offer to send utility meter alerts as described herein. In this case, the service provider can manage (e.g., create, maintain, support, etc.) a computer system, such as computer system 20 (FIG. 1), that performs a process described herein for one or more customers. In return, the service provider can receive payment from the customer(s) under a subscription and/or fee agreement, receive payment from the sale of advertising to one or more third parties, and/or the like.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system (100, 200) comprising:
at least one of:
a utility meter (110) or a server (210) communicatively connected to the utility meter (110), wherein at least one of the utility meter (110) or the server (210) is configured to:
send an alert through a network (120) in response to a predetermined threshold being met at the utility meter (110).

2. The system of claim 1, comprising a utility meter (110) and a communications stack (114) embedded in the utility meter (110), wherein the communications stack (114) is configured to send the alert through a network (120) in response to the predetermined threshold being met at the utility meter (110).

3. A system (100, 200) of claim 1, comprising:
a server (210) communicatively connected to a utility meter (110), server (210) is configured to send the alert through a network (120) in response to a predetermined threshold being met at the utility meter (110).

4. The utility meter (110) of claim 2 or claim 3, wherein the communications stack (114) or server (210) utilizes an Internet Protocol suite.

5. The utility meter (110) of claim 2 or 3, wherein the alert comprises one of the following: an email, a Short Message Service (SMS), a voice alert transmitted via Voice over IP (VoIP), and an instant message.

6. The utility meter (110) of claim 2 or 3, wherein the predetermined threshold is selected from the group consisting of: a total energy usage at a location of the utility meter (110) for a set consumption period, a peak energy usage at a location of the utility meter (110), and a total currency spent for energy consumption at a location of the utility meter (110) for a set consumption period.

7. The utility meter of claim 6, wherein the set consumption period is selected from the group consisting of: a day, a week, a month and a quarter.

8. The utility meter of any preceding claim, wherein the predetermined threshold is set by a user of the utility meter (110).

9. The system of any preceding claim, wherein the utility meter (110) or the server (210) is configured to:
store predetermined threshold data;
store utility reading data gathered by the utility meter (110) at a location of the utility meter;
compare the utility reading data and the predetermined threshold data to determine whether the utility reading data exceeds a predetermined threshold in the threshold data; and
send the alert through a network (120) in response to the utility reading data exceeding the predetermined threshold.
